(19) **Europäisches Patentamt / European Patent Office / Office européen des brevets**

(11) **EP 1 897 860 A1**

(12) **EUROPEAN PATENT APPLICATION**

(43) Date of publication:
**12.03.2008 Bulletin 2008/11**

(51) Int Cl.:
*C03C 1/00* [(2006.01)]    *C03C 3/06* [(2006.01)]
*C01B 33/158* [(2006.01)]    *C03B 8/02* [(2006.01)]

(21) Application number: **06120242.0**

(22) Date of filing: **07.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Degussa Novara Technology S.p.A.**
**20016 Pero (MI) (IT)**

(72) Inventors:
• **Costa, Lorenzo Dr.**
**27048 Sommo (PV) (IT)**

• **Giulio, Boara**
**26013 Crema (IT)**
• **Rückemann, Andreas Dr.**
**28047 Oleggio (Novara) (IT)**

(74) Representative: **Weber, Wolfgang**
**Evonik Degussa GmbH**
**DG-IPM-PAT**
**Postcode 84/339**
**Rodenbacher Chaussee 4**
**63457 Hanau (DE)**

(54) **Sol-gel process**

(57) Sol-gel process for the production of large glass monoliths, whereby tetraalkoxysilane is added to a dispersion of pyrogenically produced silica and the ratio of $SiO_2$:TEOS is 2,6 to 5,5:1.

EP 1 897 860 A1

**Description**

The invention relates to a sol-gel process for producing glass monoliths.

The sol-gel process has been reviewed in several reviews and patents for instance in the "Journal of Non-Crystalline Solids", Vol 37, No 191 (1980) by Nogami et al., "Journal of Non-Crystalline Solids" Vol. 47 No. 435 (1982) by Rabinovich et al. and in Angewandte Chemie 1998, 37, 22 by Huessing and Schubert.

The big advantage, always reported for the sol-gel technique, is that by this technique high melting point glass can be synthesized at relatively low temperatures. Generally, temperature inferior to 1300°C can be used. Therefore, silica glass manufacturing by sol-gel could be cheaper than the manufacturing with conventional methods just because it needs less energy. However, when silica glass is made by sol-gel some inclusions and defects can be more often detected. These inclusion and defects include:

1) Inorganic matter such as dust which becomes mixed into the material and the sol solution;

2) Defects produced by burning out organic inclusions, i.e. carbon;

3) Microcracks which occur at the time of gelation or that are produced during the sintering step;

4) Bubbles occurring during sintering or gelation steps;

5) Silica crystallites produced during the sintering step;

It is known to fabricate a silica body, of at least 1 kg and crack-free by adjusting the pH of the silica-containing sol and by adding some gelling agent selected from formamide, N-(-2-hydroxyethyl)-trichloroacetamide, N-(2hydroxyethyl)trifluoronitrile, methyl acetate and propyl carbonate among the others (US 6,209,357).

Furtheron it is known to tailor the formulation in order to have a better control on the preparation of crack free monolith, whereby it is proposed to obtain a specially-tailored gel microstructure, the said microstructure is provided by adjusting the relative concentrations of an alcohol diluent (e.g., ethanol) and/or one or more catalysts (e.g., HCl and HF) (US 5, 264, 197) .

Furtheron it is known to manufacture bubble-free silica glass at high yield by mixing silica sol with silica having 1-10 micron particle diameter, whereby the silica sol / silica powder ratio is 1.2 - 2.3. The obtained glasses do not have an acceptable transparency, because of the high particle size (JP 2005255495 A).

The WO 01/53225 (Yazaki) describes a sol-gel process for producing a synthetic silica glass article, in which a sol is formed having a silica loading as high as 34 to 40 %.

This high loading is achieved by introducing an aqueous colloidal silica suspension into a silicon alkoxide solution and slowly stirring the mixture together.

According to the examples TEOS was added to the silica/waterpaste, whereby the ratio $SiO_2$:TEOS varied from 0,4:1 to 5,0:1. But this ratio was without of any relevance, because according to the examples 4 and 5, which show a ratio $SiO_2$:TEOS of 5,0 or 0,4, the results failed, because the TEOS:$H_2O$ mole ratio of less than 1:20 or greater than 1:4 have a detrimental effect on the desired median particle size.

The $SiO_2$:TEOS molar ratio is of any relevance according to Yazaki WO 01/53225.

Furtheron no base is used to change the pH-value of the sol in the example 1-7. The example 8 uses the base ammonia water, but the ratio $SiO_2$:TEOS is 1:1.

The WO 02/074704 A1 (Yazaki) describes a process for making silica articles by a sol-gel process, comprising the following steps mixing fumed silica, water and acid to form a paste, mixing into the paste an alkoxysilane to form a liquid, adding a base, gelling the sol to form a gel, drying the gel using a subcritical drying process to form a dry gel, heating the dry gel in an atmosphere containing chlorine gas, heating the dry gel in an atmosphere free of chlorine gas and heating the gel to form a glass.

According to the example a $SiO_2$:TEOS ratio can be calculated of 2,4:1 and 2,0:1.

The EP 1 700 830 A1 describes a process for the production of monoliths, in particular of glass, by means of the invert sol-gel process, comprising the following steps:

a) dispersion of a pyrogenically prepared oxide of a metal and/or metalloid to form an aqueous or water-containing dispersion

b) addition of silicon alkoxide to the dispersion, which is optionally hydrolysed by means of water before the addition

c) mixing of the components to form a homogeneous colloidal sol

d) optional removal of coarse contents from the colloidal sol

e) gelling of the colloidal sol in a mould

f) replacement of the water contained in the aerogel by an organic solvent

g) drying of the aerogel

h) heat treatment of the dried gel.

According to the examples of the EP 1 700 830 the starting mixture contains the $SiO_2$:TEOS ratio of 2,0.

Unfortunately all this literature does not provide a valid solution, when the sol-gel technique is used for the manufacturing of objects with considerably large dimensions. Therefore the problem remains to produce monoliths of glass, which have large dimensions.

The subject of the invention is a sol-gel process for producing glass monoliths, characterized by the following steps:

- adding pyrogenically prepared silica to a water at acidic pH;

- adding silicon alkoxide to the dispersed silica, where by the silica / silica alkoxide molar ratio is in the ratio from 2,6 to 5,5:1, preferred 2,6 to 4,95:1, especially preferred 3,8 to 4,9:1;

- adjusting the pH;

- placing the sol solution into a container;

- gelling the sol to a wet gel;

- drying the wet gel;

- sintering the dry gel to yield a glass article.

This invention relates to sol-gel based silica-containing large monoliths which are crack-free with dimension exceeding in some cases 130 cm length and 16 diameter (cylinders) as aerogel and 70 cm length as glass. The monoliths are free of cracks and show an acceptable transmittance at 190 - 200 nm.

High yield preparation of product entailing larger, near-net shape, crack-free silica bodies can be realized by casting from a sol of colloidal silica in water, the common feature of contemplated species is freedom from cracking, in turn, to result in improved yield, and consequently, in lowered cost. In addition the inventive procedures permit to obtain shorter manufacturing time.

In accordance with the invention, it is possible to fabricate a silica body, of at least 1 kg, by an improved sol-gel process. The sol-gel body is formed by providing a silica dispersion having at least 500 ppm of dissolved silica, inducing gelation of the dispersion and drying the dispersion, such that the body exhibits a rapid increase in ultimate strength upon drying, e.g., a 50-fold increase over wet gel strength at 10 wt. % water loss.

The tailoring of the sol composition is done for a process that can so described:

A) Dispersing a pyrogenically prepared silicon dioxide in water or a water containing solvent, to form an aqueous or water containing dispersion;

B) Addition of an acid in order to reach a pH-value of 1,5 to 3,0 or 1,9 to 3,0 or 2 $\pm$ 0,5, preferred from 2,0 to 2,5;

C) Addition of tetraethylorthosilicate (TEOS) in the ratio of $SiO_2$:TEOS as disclosed above;

D) Titration of the sol by means of ammoniumhydroxide till pH 4,2 to 5,5 , preferred 4,5 to 5,0;

E) Sol so obtained is poured into moulds where the gelation takes place;

F) Substitution of solvent in the gel pores with an aprotic solvent;

G) Gel setting in a pressure chamber;

H) Inert gas fluxing into the pressure chamber;

I) Pressure chamber heating over a programmed time period to achieve pre-determinate temperature and pressure values, lower than the relevant critical value of the gel solvent, and evaporation thereof;

J) Depressurization of the pressure chamber washing by an inert gas;

K) Cooling the dried gel and removal thereof from the pressure chamber;

L) Dried gel syntherization by heating at a prefixed temperature to form a glassy body without any cracking.

The last operation is done in a furnace where the temperature is in a first step raised slowly up to 900°C , under an atmosphere containing $O_2$ (calcination phase). After this treatment, or during the same, the furnace is fed with Chlorine and/or chlorine generators. This operation is aimed to purify the material and to remove the hydroxyl group from the treated material. This treatment is carried out at a temperature between 1000 and 1250°C. After this phase the temperature is raised up to 1600°C in order to reach the vitrification phase, which is carried out under inert atmosphere. The duration of the treatment can range from tens of minutes to many hours.

The operations A-D can be carried out in one single batch so avoiding the solution transferring from vessel to vessel. In fact there is not a need to prepare a premix of SiO2 in a separate container and there is no need to remove the ethanol generated during the hydrolysis by a Rotavapor as described in the our previous patent US 6,852,300.

The preparation of the dispersion in point A can be carried out by a known route by introducing the pulverulent pyrogenically prepared silicon dioxide into the dispersing medium, such as, for example, water, and treating the mixture mechanically with a suitable device.

Suitable devices can be: Ultra-Turrax, wet-jet mill, nanomizer etc.

The solids content of the dispersion/paste can be 5 to 80 wt.-%.

The dispersion and/or paste can contain a base, such as, for example, $NH_4OH$ or organic amines or quaternary ammonium compounds.

The pyrogenically prepared silica can be added to the hydrolysate in the form of granules. In particular, granules based on silicon dioxide according to DE 196 01 415 A1 can be used. These granules have the characteristic data:

| | |
|---|---|
| Average particle diameter: | 25 to 120 $\mu$m |
| BET surface area: | 40 to 400 $m^2$/g |
| Pore volume: | 0.5 to 2.5 ml/g |
| Pore distribution: | No pores < 5 nm |
| pH: | 3.6 to 8.5 |
| Tamped density: | 220 to 700 g/l. |

They are prepared by dispersing pyrogenically prepared silicon dioxide in water and spray drying the dispersion.

In addition to better ease of handling, the use of granules has the advantage that less included air and therefore fewer air bubbles are introduced into the sol and consequently also into the gel.

A higher silicon dioxide concentration can furthermore be achieved by the use of granules. As a result, the shrinkage factor is lower, and larger glass components can be produced with the same equipment.

The amount of pyrogenically prepared silica which is brought together with the hydrolysate can be as high as 20 to 40 % by weight.

The shrinkage factor during the production of the glass can be adjusted by the content of pyrogenically prepared silica in the sol to be prepared according to the invention.

According to the invention, a shrinkage factor of 0.45 to 0.55 can advantageously be established.

The oxides according to table 1 can be employed as pyrogenically prepared silicas:

Table 1: Physico-chemical data of Aerosil

| Test method | | Standard types | | | | | | Special types | | | | |
|---|---|---|---|---|---|---|---|---|---|---|---|---|
| | | Aerosil 90 | Aerosil 130 | Aerosil 150 | Aerosil 200 | Aerosil 300 | Aerosil 380 | Aerosil OX 50 | Aerosil TT 600 | | | |
| Behaviour towards water | | hydrophilic | | | | | | hydrophilic | | | | |
| Appearance | | loose white powder | | | | | | loose white powder | | | | |
| BET surface area[1] | $m^2/g$ | $90\pm15$ | $130\pm25$ | $150\pm15$ | $200\pm25$ | $300\pm30$ | $380\pm30$ | $50\pm15$ | $200\pm50$ | | | |
| Average size of the primary particles | nm | 20 | 16 | 14 | 12 | 7 | 7 | 40 | 40 | | | |
| Tamped density approx. value[2] | g/l | 80 | 50 | 50 | 50 | 50 | 50 | 130 | 60 | | | |
| compacted goods (added "V") | g/l | 120 | 120 | 120 | 120 | 120 | | | | | | |
| W goods (added "VV") | g/l | | | 50/75 | 50/75 | 50/75 | 130 | | | | | |
| | g/l | | | | 120/150 | 120/150 | | | | | | |
| Loss on drying[3] (2 h at 105 °C) on leaving the supplier's works | % | <1.0 | <1.5 | <0.5[9] | <1.5 | <1.5 | <2.0 | <1.5 | <2.5 | | | |
| Loss on ignition[4][7] (2 h at 1,000 °C) | % | <1 | <1 | <1 | <1 | <2 | <2.5 | <1 | <2.5 | | | |
| pH[5] | | 3.7-4.7 | 3.7-4.7 | 3.7-4.7 | 3.7-4.7 | 3.7-4.7 | 3.7-4.7 | 3.8-4.8 | 3.6-4.5 | | | |
| $SiO_2$[8] | % | >99.8 | >99.8 | >99.8 | >99.8 | >99.8 | >99.8 | >99.8 | >99.8 | | | |
| $Al_2O_3$[8] | % | <0.05 | <0.05 | <0.05 | <0.05 | <0.05 | <0.05 | <0.08 | <0.05 | | | |
| $Fe_2O_3$[8] | % | <0.003 | <0.003 | <0.003 | <0.003 | <0.003 | <0.003 | <0.01 | <0.003 | | | |
| $TiO_2$[8] | % | <0.03 | <0.03 | <0.03 | <0.03 | <0.03 | <0.03 | <0.03 | <0.03 | | | |
| HCl[8][10] | % | <0.025 | <0.025 | <0.025 | <0.025 | <0.025 | <0.025 | <0.025 | <0.025 | | | |

(continued)

| Test method | | Standard types | | | | | | Special types | | | | |
|---|---|---|---|---|---|---|---|---|---|---|---|---|
| | | Aerosil 90 | Aerosil 130 | Aerosil 150 | Aerosil 200 | Aerosil 300 | Aerosil 380 | Aerosil OX 50 | Aerosil TT 600 | | | |
| Sieve residue[6] Mocker method, 45 mm) | % | <0.05 | <0.05 | <0.05 | <0.05 | <0.05 | <0.05 | <0.2 | <0.05 | | | |

1) in accordance with DIN 66131
2) in accordance with DIN ISO 787/XI, JIS K 5101/18 (not sieved)
3) in accordance with DIN ISO 787/XI, ASTM D 1208, JIS K 5101/23
4) in accordance with DIN 55921, ASTM D 1208, JIS K 5101/23
5) in accordance with DIN ISO 787/IX, ASTM D 1208, JIS K 5101/24
6) in accordance with DIN ISO 787/XVIII, JIS K 5101/20
7) based on the substance dried for 2 hours at 105 °C
8) based on the substance ignited for 2 hours at 1,000 °C
9) special packaging protecting against moisture
10) HCl content is a constituent of the loss on ignition

In a preferred form of the invention, the pyrogenically prepared silicon dioxide Aerosil OX 50, which is likewise listed in table 1, can be employed. In particular, the pyrogenically prepared silicon dioxide Aerosil OX 50 can be employed if a high UV transparency is not necessary.

The pyrogenically prepared silicon dioxide having the following physico-chemical properties which is known according to EP 1 182 168 A1 can furthermore be employed as the pyrogenically prepared oxide of metals and/or metalloids:

1. Average particle size ($D_{50}$ value) above $D_{50} \geq 150$ nm (dynamic light scattering, 30 wt.%)

2. Viscosity (5 rpm, 30 wt.%) $\eta \leq 100$ m.Pas

3. Thixotropy of the $T_i$ $\left( \dfrac{\eta(5RPM)}{\eta(50RPM)} \right) \leq 2$

4. BET surface area 30 to 60 $m^2$/g

5. Tamped density TD = 100 to 160 g/l

6. Original pH $\leq 4.5$

These physico-chemical properties are determined by means of the following measurement methods:

Particle size

Measurement method: Photon correlation spectroscopy (PCS) is a dynamic scattered light method with which particles in the range from approx. 5 nm to 5 $\mu$m can be detected. In addition to the average particle diameter, a particle size distribution can also be calculated as the measurement result.

Light source: 650 nm diode laser
Geometry 180° homodyne scattering
Amount of sample: 2 ml
Calculation of the distribution in accordance with the Mie theory

Procedure: 2 ml of dispersion (30 mol%) are introduced into a measuring cell, the temperature probe is inserted and the measurement is started. The measurement takes place at room temperature.

Viscosity

Measurement method: A programmable rheometer for analysis of complex flow properties equipped with standard rotation spindles is available.

Shear rates: 5 to 100 rpm
Measurement temperature: room temperature (23 °C)
Dispersion concentration: 30 mol%

Procedure: 500 ml of dispersion are introduced into a 600 ml glass beaker and analysed at room temperature (statistical recording of the temperature via a measuring probe) at various shear rates.

BET : in accordance with DIN 66131
Tamped density: in accordance with DIN ISO 787/XI, K 5101/18 (not sieved)
pH: in accordance with DIN ISO 787/IX, ASTM D 1280, JIS K 5101/24.

The pyrogenically prepared silicon dioxide which can be employed according to the invention can be prepared by mixing a volatile silicon compound, such as, for example, silicon tetrachloride or trichloromethylsilane, with an oxygen-containing gas and hydrogen and burning this gas mixture in a flame.

The pyrogenically prepared silicon dioxide which can be employed according to the invention can advantageously be employed in the sol-gel process according to the invention in the form of dispersions in aqueous and/or non-aqueous solvents. It can advantageously be employed if glasses having a high UV transparency are to be produced.

In the case of particularly high purity requirements of the glass, a highly pure, pyrogenically prepared silicon dioxide which is characterized by a content of metals of less than 9 ppm can furthermore be employed as the oxide of metals and/or metalloids. It is described in the patent application DE 103 42 828.3 (030103 FH).

In a preferred embodiment of the invention, the highly pure, pyrogenically prepared silicon dioxide can be characterized by the following content of metals:

Li ppb < = 10

Na ppb < = 80

K ppb < = 80

Mg ppb < = 20

Ca ppb < = 300

Fe ppb < = 800

Cu ppb < = 10

Ni ppb < = 800

Cr ppb < = 250

Mn ppb < = 20

Ti ppb < = 200

Al ppb < = 600

Zr ppb < = 80

V ppb < = 5

The total metal content can then be 3,252 ppb (~3.2 ppm) or less.

In a further preferred embodiment of the invention, the highly pure pyrogenically prepared silicon dioxide can be characterized by the following content of metals:

Li ppb < = 1

Na ppb < = 50

K ppb < = 50

Mg ppb < = 10

Ca ppb < = 90

Fe ppb < = 200

Cu ppb < = 3

Ni ppb < = 80

Cr ppb < = 40

Mn ppb < = 5

Ti ppb < = 150

Al ppb < = 350

Zr ppb < = 3

V ppb < = 1

The total metal content can then be 1033 ppb (~1.03 ppm) or less.

The preparation of the highly pure, pyrogenically prepared silicon dioxide which can be employed according to the invention can be carried out by converting silicon tetrachloride into silicon dioxide by means of high temperature hydrolysis in a flame in a known manner and using here a silicon tetrachloride which has a metal content of less than 30 ppb.

In a preferred embodiment of the invention, a silicon tetrachloride which, in addition to silicon tetrachloride, has the following content of metals can be employed:

Al less than 1 ppb

B less than 3 ppb

Ca less than 5 ppb

Co less than 0.1 ppb

Cr less than 0.2 ppb

Cu less than 0.1 ppb

Fe less than 0.5 ppb

K less than 1 ppb

Mg less than 1 ppb

Mn less than 0.1 ppb

Mo less than 0.2 ppb

Na less than 1 ppb

Ni less than 0.2 ppb

Ti less than 0.5 ppb

Zn less than 1 ppb

Zr less than 0.5 ppb

Silicon tetrachloride having this low metal content can be prepared in accordance with DE 100 30 251 or in accordance with DE 100 30 252.

The main process for the preparation of pyrogenic silicon dioxide starting from silicon tetrachloride, which is reacted in a mixture with hydrogen and oxygen, is known from Ullmanns Enzyklopädie der technischen Chemie, 4th edition, volume 21, page 464 et seq. (1982).

The metal content of the silicon dioxide according to the invention is in the ppm range and below (ppb range).

The pyrogenically prepared silicon dioxide which can be employed according to the invention is advantageously suitable for the production of special glasses having outstanding optical properties. The glasses produced by means of the silicon dioxide according to the invention have a particularly low adsorption in the low UV range.

The highly pure pyrogenically prepared silicon dioxide which can be employed according to the invention can be prepared, for example, by vaporizing 500 kg/h $SiCl_4$ having a composition according to table 1 at approx. 90 °C and transferring it into the central tube of a burner of known construction. 190 $Nm^3$/h hydrogen and 326 $Nm^3$/h air having an oxygen content of 35 vol.% are additionally introduced into this tube. This gas mixture is ignited and burns in the flame tube of the water-cooled burner. 15 $Nm^3$/h hydrogen are additionally introduced into a jacket jet surrounding the central jet in order to avoid caking. 250 $Nm^3$/h air of normal composition are moreover additionally introduced into the flame tube. After the reaction gases have cooled, the pyrogenic silicon dioxide powder is separated off from the hydrochloric acid-containing gases by means of a filter and/or a cyclone. The pyrogenic silicon dioxide powder is treated with water vapour and air in a deacidification unit in order to free it from adhering hydrochloric acid.

The metal contents are reproduced in table 2.

Table 1: Composition of $SiCl_4$

| Al | B | Ca | Co | Cr | Cu | Fe | K | Mg | Mn | Mo | Na | Ni | Ti | Zn | Zr |
|---|---|---|---|---|---|---|---|---|---|---|---|---|---|---|---|
| ppb | ppb | ppb | ppb | ppb | ppb | ppb | ppb | ppb | ppb | ppb | ppb | ppb | ppb | ppb | ppb |
| <1 | <30 | <5 | <0.1 | <0.2 | <0.1 | <0.5 | <1 | <1 | <0.1 | <0.2 | <1 | <0.2 | <0.5 | <1 | <0.5 |

Table 2: Metal contents of the silicon dioxides (ppb)

| | Example 2a | |
|---|---|---|
| [ppb] | | |
| Li | 0.8 | < = 10 |
| Na | 68 | < = 80 |
| K | 44 | < = 80 |
| Mg | 10 | < = 20 |
| Ca | 165 | < = 300 |
| Fe | 147 | < = 800 |
| Cu | 3 | < = 10 |
| Ni | 113 | < = 800 |
| Cr | 47 | < = 250 |
| Mn | 3 | < = 20 |
| Ti | 132 | < = 200 |
| Al | 521 | < = 600 |
| Zr | 3 | < = 80 |
| V | 0.5 | < = 5 |
| | | |
| | $\Sigma$ 1,257 ppb = 1.26 ppm | $\Sigma$ = 3,255 ppb = 3.2 ppm |

A pyrogenically prepared silicon dioxide powder known from WO 2004/054929 having

- a BET surface area of 30 to 90 $m^2$/g,
- a DBP number of 80 or less,
- an average aggregate area of less than 25,000 $nm^2$,
- an average aggregate circumference of less than 1,000 nm, at least 70 % of the aggregates having a circumference of less than 1,300 nm,

can furthermore be used according to the invention as the pyrogenically prepared oxide of a metal and/or a metalloid.

In a preferred embodiment, the BET surface area can be between 35 and 75 $m^2$/g. Values between 40 and 60 $m^2$/g can be particularly preferred. The BET surface area is determined in accordance with DIN 66131.

In a preferred embodiment, the DBP number can be between 60 and 80. In the DBP absorption, the power uptake, or the torque (in Nm), of the rotating paddles of the DBP measuring apparatus on addition of defined amounts of DBP is measured, in a manner comparable to a titration. For the silicon dioxide which can be employed according to the invention, a sharply pronounced maximum with a subsequent drop at a particular addition of DBP results here.

In a further preferred embodiment, the silicon dioxide powder which can be employed according to the invention can have an average aggregate area of not more than 20,000 $nm^2$. An average aggregate area of between 15,000 and 20,000 $nm^2$ can be particularly preferred. The aggregate area can be determined, for example, by image analysis of the TEM images. In the context of the invention, aggregate is to be understood as meaning primary particles of similar structure and size which have fused together, the surface area of which is less than the sum of that of the individual isolated primary particles. Primary particles are understood as meaning particles which are initially formed in the reaction and can grow together to form aggregates in the further course of the reaction.

In a further preferred embodiment, the silicon dioxide powder which can be employed according to the invention can have an average aggregate circumference of less than 1,000 nm. An average aggregate circumference of between 600 and 1,000 nm can be particularly preferred. The aggregate circumference can likewise be determined by image analysis of the TEM images.

An embodiment in which at least 80 %, particularly preferably at least 90 % of the aggregates have a circumference of less than 1,300 nm can be preferred.

In a preferred embodiment, the silicon dioxide powder which can be employed according to the invention can assume, in an aqueous dispersion, a degree of filling of up to 90 wt.%. The range between 20 and 40 wt.% can be particularly preferred.

The determination of the maximum degree of filling in an aqueous dispersion is carried out by incorporating the powder into water in portions by means of a dissolver, without the addition of further additives. The maximum degree of filling is reached when, in spite of an increased stirrer output, either no further powder is taken up into the dispersion, i.e. the powder remains dry on the surface of the dispersion, or the dispersion becomes solid or the dispersion starts to form lumps.

The silicon dioxide powder which can be employed according to the invention can furthermore have a viscosity of less than 100 mPas, based on a 30 wt.% aqueous dispersion at a shear rate of 5 revolutions/minute. In particularly preferred embodiments, the viscosity can be less than 50 mPas.

The pH of the silicon dioxide powder which can be employed according to the invention, measured in a 4 per cent aqueous dispersion, can be between 3.8 and 5.

The silicon dioxide powder which can be employed according to the invention can be employed in the form of an aqueous dispersion.

The aqueous dispersion which can be employed according to the invention can have a content of silicon dioxide powder of between 5 and 80 wt.%. Dispersions having a content of silicon dioxide powder of between 20 and 40 can be particularly preferred. These dispersions have a high stability with a comparatively low structure. A dispersion of approx. 30 wt.% can be very particularly preferred.

In a preferred embodiment, an aqueous dispersion which can be employed according to the invention with 30 wt.% of silicon dioxide powder can have a viscosity which is less than 150 mPas at a shear rate of 50 rpm. The range below 80 mPas can be particularly preferred.

The aqueous dispersion which can be employed according to the invention can preferably have an average particle size of the aggregates of the silicon dioxide powder which is less than 200 nm. For particular uses, a value of less than 150 nm can be particularly preferred.

The dispersion which can be employed according to the invention can be stabilized by the addition of bases or cationic polymers or aluminium salts or a mixture of cationic polymers and aluminium salts or acids.

Bases which can be employed are ammonia, ammonium hydroxide, tetramethylammonium hydroxide, primary, secondary or tertiary organic amines.

Addition of silicon alkoxide to the dispersion

Any desired silicon alkoxide like tetraethylorthosilicate (TEOS), tetramethylsilicate (TMOS), methyltriethylorthosilicate (MTEOS) etc. can be employed as the alkoxide. In particular, TEOS (tetraethoxysilane) can be employed.

Further alkoxides can be: Dynasil 40

Optionally the hydrolysis can be initiated by treating the ethoxysilane with a dilute acid, a hydrolysate being formed.

The hydrolysis of the alcoxide or the Dynasil 40 is preferably done in the range between 21 and 25 °C and the pH between 1,5 and 3, but these ranges can be extended up to conditions where the hydrolysis reaction is achieved in less than 4 h for a volume of around 30 l and there are no side polycondensation reactions producing oligomeric $SiO_2$ agglomerates large enough to clog a 10 micron mesh. The TEOS/Water molar ratio should be sufficient to have a complete hydrolysis reaction in the case of the TEOS or to complete the final formation of (poly)silicic acid in the case of Dynasil 40.

Several acids can be used to trigger the hydrolysis:

Inorganic acids like: HCl, $HNO_3$, $H_2SO_4$, HF which are known in the art. Usually for strong acids the pH is 2.

Organic acids like: citric acid, malonic acid, oxalic acid, succinic acid (hydrolysis reaction for this last acid needs use of ultrasound to proceed). Tartaric acid was also used but the salt produced after titration is not so soluble and crystals were present in the gel. Further work showed that this difficulty may be overcome. The use of other organic acids is not to be excluded. The advantage of using such acids is that the resulting gels detach easily from stainless steel moulds.

The hydrolysate can be passed through a filter.

The filter can have a pore diameter of 1 to 12 micrometres, preferably 9 to 11 micrometres. After the hydrolysis, the alcohol formed may be removed from the aqueous solution (hydrolysate) under conditions of reduced pressure.

Mixing of the components to form a homogeneous colloidal sol

Mixing of the alkoxide or optionally of the hydrolysate with the oxide of metals and/or metalloid prepared by the pyrogenic route can be carried out initially introducing the oxide suspension or dispersion into the mixing vessel and adding the alkoxide or the hydrolysate with good mixing to get a homogeneously dispersed liquid and a stable colloidal suspension able to go to the following steps without producing too many agglomerates, preferably producing no agglomerates at all.

The temperature at which addition and the alkoxide to the oxide is carried out can be 30 °C, preferably in the range of 10 to 25 °C.

The mixing device can preferably be a device of the Ultra-Turrax type, as a result of which breaks in the gel are advantageously reduced.

A colloidal sol is obtained by mixing the hydrolysate with the pyrogenically prepared oxide of the metal and/or metalloid. Mixing of the hydrolysate with the pyrogenically prepared oxide of metals and/or metalloids should preferably be carried out such that a homogeneous dispersion or a homogeneous sol is obtained.

Optional removal of coarse contents from the colloidal sol

Centrifugation is optionally carried out in order to:

- obtain a more homogeneous sol able to give a more homogeneous gelation process and a gel that has better characteristics for the next steps

- separate particles present in the sol that can give rise to impurities in the gel

- eliminate aggregates that have been produced by local gelation triggered by particular conditions of temperature or silica concentration or other reasons, like physical or chemical fluctuations (slow polycondensation), that occured during previous steps of the process.

The conditions of centrifugation time and centrifugation force field, should be such that no more than 15 wt.-% of the material is withdrawn and preferably no more than 5 wt.-%.

This colloidal sol can contain undesirable coarse particles which can lead to inhomogeneities in the glass body. These inhomogeneities cause trouble above all if the glass is to be used for the production of light-conducting fibres.

The removal of the coarse content from the colloidal sol can be carried out by centrifuging the colloidal sol. The particles which are larger or have a higher density are separated off by the centrifugation. The centrifugation step may be advantageous if blanks are to be produced for the production of optical fibres from the colloidal sol.

After the hydrolysis of the alkoxide and/or after the addition of the oxide prepared by the pyrogenic route, the alcohol formed during the hydrolysis of the alkoxide, such as, for example, ethanol, can be evaporated out of the solution or mixture.

The ethanol evaporation is done to achieve gelling conditions which give a gel that has desirable properties for the rest of the process, like faster solvent-exchange. The evaporation is done in such a way that during it there is not an acceleration of the polycondensation reaction. If done in a rotating evaporator, the vacuum should be not so high as to produce boiling which can bring liquid in zones where the evaporator cannot act any more on them and not so small to be not practical for the purposes of the evaporation. As a first indication the evaporation can be done up to when the alcohol (ethanol) concentration in the solution is below 10 % by weight, provided that the concentration of silica in the solution remains low enough so that no clogs or agglomerates are spontaneously formed in the solution under evaporation. Further evaporation can be done, provided that if there is a formation of aggregates in the form of clogs or flakes, they can be eliminated by filtering or centrifugation.

Gelling of the resulting colloidal sol in a mould

The triggering of the gelation can be done either by increasing the temperature or increasing the pH. Temperatures and pH to be achieved are chosen so to change the real part of the visco-elastic response function of the sol Gel, measured with an oscillatory rheometer, from below of at least $10^{-2}$ Pa, to values above 500 Pa and preferably above 10000 Pa in a period of time between few minutes and no more than 20 hours, where the resulting sample can be considered a Gel.

Gelling of the colloidal sol can be initiated by a shift in the pH. The pH can shifted here by addition of a base.

In a preferred embodiment of the invention, aqueous ammonia solution can be added to the colloidal sol. The addition can be carried out dropwise. It can be ended when a pH of 4,2 to 5,5 is reached.

The base can be added with constant stirring, local inhomogeneities in the distribution of the base in the colloidal sol being avoided. Inhomogeneities in the distribution of the base can have the effect locally of too severe gelling, and therefore impairment of the homogeneity of the sol or gel. It may therefore be advantageous if the local concentration of the acid on addition of the base does not last long enough to generate local gelation.

In a preferred embodiment of the invention, urotropine (hexamethylenetetramine) can be employed as the base. A temperature of 25 $\pm$ 1 °C can be maintained in the colloidal sol during the addition of the base. If the parameters of the addition of the base are maintained, a gelling phase of several hours can be established. This gelling phase may be necessary to prevent premature condensation of the sol outside the mould.

During the gelling phase induced by a base, the colloidal sol can be introduced into a mould which determines the final shape of the monolith.

A temperature of 25 $\pm$ 2 °C can be maintained during filling of the mould. Furthermore, filling should be effected such that no bubbles are formed.

The mould itself can be produced from polytetrafluoroethylenes, polyethylenes, polycarbonates, polymethyl methacrylates or polyvinyl chloride. A porous material chosen from the group consisting of graphite, silicon carbide, titanium carbide, tungsten carbide and mixtures thereof can be used, if the drying to xerogel is desired. Further materials can be:

various plastics, glass, metal, fibreglass, coated metal, ceramic and wood.

Plastic can be: polystyrene, polypropylene, polymethylpentene, fluorine-containing plastics, such as, for example, TEFLON®, and silicone rubber.

The surface of the mould should be smooth. If the mould is produced from glass, it is advisable to treat the glass surface with a treatment agent, such as, for example, alcohol or a long-chain organic acid.

Undecanoic acid, for example, can be employed as the long-chain organic acid.

These treatment agents can be diluted in a mixture with acetone, ethanol or other proven agents.

Optional replacement of the water contained in the resulting aquagel by an organic solvent

Replacement of the water in the gelled sol is necessary because water has too high a critical point. At the temperature of the drying phase, water can be aggressive both towards rustproof steel and towards the $SiO_2$ structure of the sol.

During the replacement of the water with a solvent, the solvent can be added by an exchange process, the exchange process being ended, when the water within the sol/gel has been completely reduced to a level of no damage to the gel in the drying phase.

Solvents which can be used are ketones, alcohols, acetates and alkanes. It may be advantageous if a solvent which is miscible with water is used. Acetone in particular can preferably be used.

It may be advantageous if the replacement of the water contained in the aerogel by an organic solvent is carried out at a pH of approx. 4. By this means, washing out of $SiO_2$ oligomers which have not yet condensed completely and too severe a shrinkage can be prevented.

One embodiment of the invention can start with a low concentration of acetone in a mixture of water and acetone.

The content of acetone should not exceed 30 %.

The water content of the mixture of water and acetone should not tend abruptly towards zero during the replacement process. However, as soon as the water content of the exiting acetone/water mixture is less than about 2 %, the replacement can be continued with anhydrous acetone.

The process for the replacement of the water by acetone can be carried out in individual vessels. It is also possible to arrange several vessels in series in an array and to pass the mixture of water and acetone successively through the connected vessels.

In another embodyment of the procedure it is preferable to have a first flux of water at the same pH and temperature in the gel as the one used to trigger gelation. Then the pH of the washing water is slowly brought to 7. This optional procedure is done to take out salts from the water embedded in the gel that may cause, if not removed, nucleation centers during consolidation giving rise to cristallization and consequent material non homogeneity or other compounds that can give origin to impurites in the final glass.

Current process starts by exchanging the water with an acetone/water solution whose acetone concentration keeps increasing with time. The ways of doing the solvent exchange can be classified in two families. The procedures stop when a specific concentration of water is reached and it does not change significantly after a period of rest.

There are several procedures of exchange which can be done i.e. a continuous flux or fill-empty-procedure.

Continuous Flux

A continuous flux of solvent washes the gel. The rate of the flux is a function of shape and size. The acetone concentration in the flux increases with time. Usually many samples are connected in series. The flux value is chosen in function of the size and form of the sample. The criteria is that the flux should be not so small as to last a very long time making the procedure impractical but not so fast as to consume a lot of solvent. In practice flow can be started from few ml/h and increased up to tens or hundreds of ml/min if the water concentration at the exit side, after having flux "washed" the sample(s) is increasing. The temperature should not be too high so as to induce excessive gas formation in the solvent and especially into the pores and not so low as to slow down the solvent transport process. In practice the temperature range is chosen by a procedure that starts with room temperature and is optimised by increasing it when the rate of change in water concentration decreases by one order of magnitude or more. This occurs in the later stages of the process when water concentration is below at least 50 % in volume.

Fill-Empty fluid

The containers where the samples are contained are filled with solvent at a given acetone concentration, left there and then are emptied under saturated atmosphere. The containers are then re-filled with another solution at higher acetone concentration. This procedure is repeated several times. Criteria to choose the frequency of changes are given by the fact that it is convenient to do fewer frequent changes but the difference in concentration between the new bath and the actual acetone concentration measure has to be as high as possible. This has to be compatible with the fact that too high a difference can induce tensions that can damage the gel. In practice a 20 % difference is suitable but even 40 % could be supported. Criteria to choose the operating temperature are similar to the ones described in the previous section.

Stop signal - water content

The usually followed procedure foresees that the water concentration remaining in the gel before going to the drying step should be close to 0,5 % in order to avoid the gel cracking. It has been observed however that some large samples (gel tubes of 160 mm diameter) do not crack even for water concentrations in the 2-4 % range. A systematic and statistically significant experimentation on this finding is still to be done. It has to be said that around 1/3 of the solvent exchange time is spent in lowering the water concentration from a few % to the 0,5 % set point.
Furthermore, it has been observed that the distribution of the water concentration inside the gel can be quite inhomogeneous (about one order of magnitude difference between the concentration measured in the surface and in the internal part of the gel body, depending on the sample size and the particular procedure). The findings show that having a more homogeneous distribution can be as important as having a low level of water. So in practice samples with high water concentrations of 4 % or above in the gel can be suitable to go to the drying step if enough time is left to allow a homogenisation of water concentration inside the sample. To achieve this there may not be the need of fluxing. Criteria to choose the operating temperature are similar to the ones described in the previous section.
In a preferred embodiment of the invention, a purification step can be carried out between the individual vessels in order to remove any gel/sol particles present in the mixture of water and acetone. This purification step can be carried out by means of a filter.

Drying of the aquagel

Drying of the aquagel obtained can be carried out in an autoclave. The drying conditions, such as pressure and temperature, can be adjusted to either supercritical or below-critical values.
This procedure objective is to dry the gel without introducing/increasing tension in the gel that can give origin to cracks or breakages in this or the following steps either in the dried gel or in the glass. Samples are introduced in a closed container that can stand pressure and/or temperature, usually an autoclave. Eventually a given amount of solvent of the same nature as the one present in the gel pores is added into the container. The amount is chosen so as to get the desired pressure inside the closed container when the maximum temperature of operation is achieved.
The pressure is first increased by introducing a chemically inert gas. Nitrogen is used for economic reasons. The pressure to be achieved is a function of the desired maximum total pressure, which can be above or below the critical pressure of the solvent in the gel. It has to be high enough so as to get an integer gel without cracks at the end of the process. The value usually is taken to be few to several tens of bars and in any case is below the critical pressure of the solvent in the gel.
Once the pressure has been increased the temperature is raised even up to values above the boiling point of the solvent embedded in the gel for the pressure present in the container. It is recommended to achieve temperatures in the range of the critical temperature of the solvent in the gel but it has also been shown that if the conditions of the original wet gel:

- water concentration homogeneity
- residual water concentration in gel
- low tension in the wet gel
- strength of the wet gel silica network

are suitable the temperature to be reached can be several degrees K lower than the critical one and still the resulting dry gel is not cracked.

Then the sample is left for a few minutes at those thermodynamic conditions and then the pressure is released. The rate of release is chosen to be fast enough to reduce overall process time but not so fast as to crack the gel due to too strong pressure gradients inside the dry gel (aerogel).

The currently used conditions are schematically indicated in the following

$N_2$ atmosphere   →   Temperature increase usually at up to 45 bar 5 °C/h to at least 225 °C but usually to 250 °C. Pressure achieved is usually 58 bar. It has been observed that also drying can be done at 30 bar (see application NO2003A000001). Pressure is released at 5 bar/h.

It has been noticed that the solvent in the wet gel undergoes chemical reactions in the autoclave producing high molecular weight organic moieties (a black/browning tar) which can also remain inside the dried gel. It is convenient to minimize the amount of such moieties to reduce the amount of calcinations to be done and the amount of energy liberated by such reaction inside the oven and the amount of gas (CO, $CO_2$, $H_2O$) produced in the following heath treatment during calcination. It has been observed that reducing the maximum temperature reached to below 250 °C by several °C can significantly reduce such moieties.

After the pressure is reduced to atmospheric pressure vacuum is applied to withdraw as much adsorbed organic gas (residual solvent and eventual reaction products formed in the autoclave during the previous cycle) as possible, following by Nitrogen washing. This washing procedure is repeated several times. Faster procedures with heating rates in excess of 20 °C/h and total duration of 14 h have also been applied but not enough statistics to conclude on yields. The dried gel is called aerogel.

Heat treatment of the dried aerogel

The process is usually divided into three stages.

1. Calcination in oxygen containing atmosphere. The sample is placed in the oven. A vacuum is applied followed by an oxygen atmosphere. The temperature is raised to 800 °C at a slow enough rate to avoid excessive gas generation due to burning products which can cause pressure inside the gel/aerogel with consequent of the aerogel. Several cycles of vacuum/oxygen are applied.

2. Dehydration/Purification. Done in a chlorine containing atmosphere at 800 °C (HCl or/and $SOCl_2$ using He as carrier gas in concentration He:HCl around 10:1). This cycle lasts several days for the largest 80 mm glass tubes.

3. Consolidation. Done in He plus eventually a slight amount of oxygen above 1300 °C and below 1450 °C.

These processes are done with the use of vacuum during the heath treatment, as described in patent application NO2001A000006, to avoid (diminish) bubble formation in glass bodies, particularly high temperature bubbles during pulling of optical fibers.

Further on the process can be done as follows:

A vacuum is created in the oven where the sample is placed. Then at room temperature a mixed atmosphere $O_2$/HCl is introduced. The proportions are chosen to be first rich enough in oxygen to start the calcinations of the organics, but at the same time to have HCl introduced in the aerogel pores since the beginning. Then the temperature is raised in several steps to temperatures below 800 °C, applying vacuum at those intermediate temperatures and then introducing mixed atmosphere $O_2$/HCl with increasing concentration of HCl. Finally when the temperature reaches around 800 °C the atmosphere is pure HCl.

The overall duration of cycle up to this point is a few to several hours, depending on the sample size and oven-heating rate. If the oven chamber, where the Aerogel is heat treated, has cold zones or other zones, where $H_2O$ is

present, a substance, which reacts with water producing a gas that does not condense at low temperatures, like $SOCl_2$, is introduced. In this last case the temperature is reduced below 600 °C and preferably below 450 °C to avoid the occurrence of undesired reactions. The oven chamber is again cleaned with vacuum and then the temperature is raised up to above 1300 °C in He atmosphere plus optionally oxygen to consolidate the aerogel to glass.

The overall duration of this cycle is between 21 to 28 hours depending on the size of the sample (the larger the longer) and on the oven characteristics. By improving characteristics of the oven like cooling down/heating up times and reducing cold zones, where water can condense, the overall duration could be reduced further.

The previous procedures can be further modified to achieve some characteristic variations in the glass properties. It has been observed that the use of oxygen at 800 °C before the heating up to achieve consolidation and/or the use of a He/O$_2$ atmosphere during consolidation can give variations to the material properties including:

higher viscosity
lower refractive index
better behaviour during drawing

The results show that the use of $SOCl_2$ as a chlorinating agent at 800 °C can give a glass material with less light dispersion.

The heat treatment of the dried aerogel is carried out in order to produce a sintered glass body from the porous aerogel object. The heat treatment can comprise the following four steps:

A. removal of the residual solvent contents which adhere to the aerogel by means of calcination,
B. purification of the aerogel,
C. consolidation of the aerogel to obtain a glass body,
D. cooling of the glass body.

The heat treatment can be carried out under a separate gas atmosphere, it being possible for the gas atmosphere to assist the particular purpose of the steps of the heat treatment.

The calcination according to step A), which is intended to serve to remove the organic solvents, can be carried out under an oxygen atmosphere at a temperature of 550 °C to 800 °C. This calcining step can be ended when no further evolution of CO or $CO_2$ is detected.

The purification of the aerogel according to step B) can take place using a chlorinating agent. Thus, for example, HCl, $Cl_2$, $SOCl_2$ and others can be used as the chlorinating agent.

If appropriate, a noble gas, such as, for example, helium, can additionally used as a carrier gas.

If appropriate, if the glass body to be produced is to have an IR transparency, complete dehydration of the aerogel can be achieved by carrying out the purification in an anhydrous atmosphere.

In a preferred embodiment of the invention, the purification can be carried out by means of $SOCl_2$ at a temperature of 200 to 600 °C. A more extensive purity of the glass and higher transparency, in particular in the UV range, can be obtained if a pyrogenically prepared silicon dioxide Aerosil® VP EG-50 is used as the starting substance.

The consolidation of the aerogel according to step C) in order to obtain a glass body can be carried out under a noble gas atmosphere, with, for example, helium in a mixture with oxygen, it being possible for the oxygen concentration to be 2 to 5 %. The consolidation can be carried out at a temperature of 600 to 1,400 °C.

During the heating up phase, vacuum can be applied in order to remove any bubbles contained in the aerogel. This heating up phase is particularly suitable in the temperature range from 600 to 800 °C.

The actual consolidation phase can be initiated with the heating up from 600 to 800 °C to a temperature of 1,300 to 1,400 °C, it then being possible for this temperature range to be retained for a sufficient period of time.

Cooling of the resulting glass body according to step D) can be carried out at a rate of up to 5 °C/minute, preferably 4 to 1 °C/minute, in the range from 1,400 to 900 °C.

The pyrogenically prepared silicon dioxide which can be employed according to the invention is advantageously suitable for the production of special glasses having outstanding optical properties. The glasses produced by means of the silicon dioxide according to the invention have a particularly low adsorption in the low UV range.

Without wishing to be bound to theory it is proposed that the reasons for the good results in terms of quality of the glass (see for instance the trasmittance values) and the high yield for glasses with big dimension stems from the fact that adding a suitable amount of silica, in relation to the TEOS concentration, to the system, it is possible to better control that branching and the polycondensation rate. It is thought that this could lead to a more gentle organization of the pristine aquagel that brings less tension in the tridimensional solid.

**Example 1 (comparative example)**

To 12.357 1 of HCl 0,01 N are added under strong agitation using an Ultra-Turrax mixer 5.19 kg of colloidal silica powder (Aerosil EG 50 by Degussa AG). This dispersion is transferred to a reactor where under vigorous stirring are added 9,12 1 of tetraethylorthosilicate (TEOS). In this case the molar ratio fumed silica / TEOS is 2.

After about 60 minutes to this dispersion a solution of ammonium hydroxide 0,1 N is added dropwise under stirring, until a pH of about 4.91 is reached.

This colloidal solution is poured into various cylindrical containers of glass with a diameter of 5.2 cm and filled up to a height of 110 cm, which are then closed.

After about 12 hours the washing in water starts. After several washes the gel, which is obtained, is washed with a mixture of about acetone 10 wt.-% in water. Subsequently the acetone concentration in the following mixtures used to wash is gradually raised until anhydrous acetone is used for the final washings.

The samples are then dried in an autoclave at a temperature of 250 °C and 59 bar. The autoclave is then pressurized with nitrogen at room temperature up to the pressure of 50 bar. The heating of the autoclave is started, until the temperature of 250 °C is reached. With increasing temperature values, the pressure inside the autoclave increase up to 60 bar, and such a pressure value is kept constant by acting on the vent valves. With the temperature being still kept constant at 250 °C, by acting on the vent valve, the pressure inside the autoclave is then caused to decrease down to room pressure, at the speed of 4 bar/hour. The solvent contained inside the autoclave is thus removed. The last traces of such a solvent are removed by washing the autoclave with a slow stream of nitrogen for about 15 minutes and/or using vacuum.

A dry gel, called aerogel, is obtained which is calcinated at a temperature of 800 °C in an oxidising atmosphere.

During the heating, the residual organic products coming from the treatment in the autoclave are burnt.

The disk of silica aerogel, after calcination, is subjected to a stream of helium containing 2 % of chlorine, at a temperature of 800 °C and for a duration of 30 minutes to remove the silanolic groups present; the aerogel disk is finally heated in a helium atmosphere to a temperature of 1400 °C for the duration of one hour so that the silica reaches complete densification. At the end of the cycle all the glasses were broken.

**Example 2 (comparative example)**

To 12.5 1 of HCl 0,01 N are added under strong agitation using an Ultra-Turrax mixer 5.28 kg of colloidal silica powder (Aerosil EG 50 by Degussa AG). This dispersion is transferred to a reactor where under vigorous stirring are added 7,121 1 of tetraethylorthosilicate (TEOS). The molar ratio Silica / TEOS is 2.58.

After about 60 minutes to this dispersion a solution of ammonium hydroxide 0,1 N is added dropwise under stirring, until a pH of about 4.85 is reached.

This colloidal solution is poured into various cylindrical containers of glass with a diameter of 5.2 cm and filled up to a height of 110 cm, which are then closed.

After about 12 hours the washing in water starts. After several washes the gel, which is obtained, is washed with a mixture of about acetone 10 wt.-% in water. Subsequently the acetone concentration in the following mixtures used to wash is gradually raised until anhydrous acetone is used for the final washings.

The samples are then dried in an autoclave at a temperature of 250 °C and 59 bar. The autoclave is then pressurized with nitrogen at room temperature up to the pressure of 50 bar. The heating of the autoclave is started, until the temperature of 250 °C is reached. With increasing temperature values, the pressure inside the autoclave increase up to 60 bar, and such a pressure value is kept constant by acting on the vent valves. With the temperature being still kept constant at 250 °C, by acting on the vent valve, the pressure inside the autoclave is then caused to decrease down to room pressure, at the speed of 4 bar/hour. The solvent contained inside the autoclave is thus removed. The last traces of such a solvent are removed by washing the autoclave with a slow stream of nitrogen for about 15 minutes and/or using vacuum.

A dry gel, called aerogel, is obtained which is calcinated at a temperature of 800 °C in an oxidising atmosphere.

During the heating, the residual organic products coming from the treatment in the autoclave are burnt.

The disk of silica aerogel, after calcination, is subjected to a stream of helium containing 2 % of chlorine, at a temperature of 800 °C and for a duration of 30 minutes to remove the silanolic groups present; the aerogel disk is finally heated in a helium atmosphere to a temperature of 1400 °C for the duration of one hour so that the silica reaches complete densification. After cooling, the disk reaches the desired final dimensions (diameter 2,6 cm and height 55,0 cm), maintaining a homothetic ratio with the form of the initial aerogel determined by the initial mould. After the cycle all the glasses of the glasses were broken.

**Example 3 (according to the invention)**

To 21 1 of HCl 0,01 N are added under strong agitation using an Ultra-Turrax mixer 9.0 kg of colloidal silica powder (Aerosil EG 50 by Degussa AG). This dispersion is transferred to a reactor where under vigorous stirring are added 8.092 1 of tetraethylorthosilicate (TEOS). The molar ration Silica / TEOS is 3.85.

After about 60 minutes to this dispersion a solution of ammonium hydroxide 0,1 N is added dropwise under stirring, until a pH of about 5 is reached.

This colloidal solution is poured into various cylindrical containers of glass with a diameter of 5.2 cm and filled up to a height of 110 cm, which are then closed.

After about 12 hours the washing with water starts. After several washes the gel, which is obtained, is washed with a mixture of about acetone 10 wt.-% in water. Subsequently the acetone concentration in the following mixtures used to wash is gradually raised until anhydrous acetone is used for the final washings.

The samples are then dried in an autoclave at a temperature of 250 °C and 59 bar. The autoclave is then pressurized with nitrogen at room temperature up to the pressure of 50 bar. The heating of the autoclave is started, until the temperature of 250 °C is reached. With increasing temperature values, the pressure inside the autoclave increase up to 60 bar, and such a pressure value is kept constant by acting on the vent valves. With the temperature being still kept constant at 250 °C, by acting on the vent valve, the pressure inside the autoclave is then caused to decrease down to room pressure, at the speed of 4 bar/hour. The solvent contained inside the autoclave is thus removed. The last traces of such a solvent are removed by washing the autoclave with a slow stream of nitrogen for about 15 minutes and/or using vacuum.

A dry gel, called aerogel, is obtained which is calcinated at a temperature of 800 °C in an oxidising atmosphere.

During the heating, the residual organic products coming from the treatment in the autoclave are burnt.

The disk of silica aerogel, after calcination, is subjected to a stream of helium containing 2 % of chlorine, at a temperature of 800 °C and for a duration of 30 minutes to remove the silanolic groups present; the aerogel disk is finally heated in a helium atmosphere to a temperature of 1400 °C for the duration of one hour so that the silica reaches complete densification. After cooling, the disk reaches the desired final dimensions (diameter 2,6 cm and height 55,0 cm), maintaining a homothetic ratio with the form of the initial aerogel determined by the initial mould. After the cycle all the glasses were unbroken

**Example 4 (according to the invention)**

To 11.27 1 of HCl 0,01 N are added under strong agitation using an Ultra-Turrax mixer 7.44 kg of colloidal silica powder (Aerosil EG 50 by Degussa AG). This dispersion is transferred to a reactor where under vigorous stirring are added 5.18 1 of tetraethylorthosilicate (TEOS). The molar ration Silica / TEOS is 4.95.

After about 60 minutes to this dispersion a solution of ammonium hydroxide 0,1 N is added dropwise under stirring, until a pH of about 5 is reached.

This colloidal solution is poured into various cylindrical containers of glass with a diameter of 5.2 cm and filled up to a height of 110 cm, which are then closed.

After about 12 hours the washing in water starts. After several washes the gel, which is obtained, is washed with a mixture of about acetone 10 wt.-% in water. Subsequently the acetone concentration in the following mixtures used to wash is gradually raised until anhydrous acetone is used for the final washings.

The samples are then dried in an autoclave at a temperature of 250 °C and 59 bar. The autoclave is then pressurized with nitrogen at room temperature up to the pressure of 50 bar. The heating of the autoclave is started, until the temperature of 250 °C is reached. With increasing temperature values, the pressure inside the autoclave increase up to 60 bar, and such a pressure value is kept constant by acting on the vent valves. With the temperature being still kept constant at 250 °C, by acting on the vent valve, the pressure inside the autoclave is then caused to decrease down to room pressure, at the speed of 4 bar/hour. The solvent contained inside the autoclave is thus removed. The last traces of such a solvent are removed by washing the autoclave with a slow stream of nitrogen for about 15 minutes and/or using vacuum.

A dry gel, called aerogel, is obtained which is calcinated at a temperature of 800 °C in an oxidising atmosphere.

During the heating, the residual organic products coming from the treatment in the autoclave are burnt.

The disk of silica aerogel, after calcination, is subjected to a stream of helium containing 2 % of chlorine, at a temperature of 800 °C and for a duration of 30 minutes to remove the silanolic groups present; the aerogel disk is finally heated in a helium atmosphere to a temperature of 1400 °C for the duration of one hour so that the silica reaches complete densification. After cooling, the disk reaches the desired final dimensions (diameter 2,6 cm and height 55,0 cm), maintaining a homothetic ratio with the form of the initial aerogel determined by the initial mould. After the cycle all the glasses were unbroken.

Although it is within the scope of the invention to tailor the silica/TEOS molar ratio at any desired level in the range 1 to 5 the inventors have now surprisingly found that a ratio bigger than 2.45 the changes to obtain big objects are significatly improved. Elsewhere, it as been also observed that scattering and transmittance at 190 nm are better when the ratio is bigger than 2.58 while the transmittance at 254 nm seems to be not affected by the Silica / TEOS molar ratio.

The results are listed in table 1

| | | Aerogel | | | | Glass | |
|---|---|---|---|---|---|---|---|
| EX | SiO2/TEOS | Density | Surface Area (m2/g) | Pores volume (ml/g) | Pores diameter (nm) | Transmittance 190nm (%) | Transmittance 254 nm (%) |
| 1 | 2 | 0,411 | 380 | 1,71 | 30 | 66 | 92,0 |
| 2 | 2,58 | 0,407 | 289 | 2,08 | 45 | 67 | 94,9 |
| | 3,46 | 0,403 | 203 | 1,76 | 50 | 82,8 | 95 |
| 3 | 3,85 | 0,399 | 80 | 1,51 | 80 | 77 | 93,1 |
| | 4,84 | 0,392 | 46 | 0,49 | 200 | 80,5 | 92,2 |
| 4 | 4,95 | 0,389 | 48 | 0,48 | 210 | 74,1 | 92,2 |

In terms of efficiency of the process, extensive tests have been carried out in order to evaluate the yield unbroken glasses, in tab 2 are reported some of the results obtained

| | | % Unbroken Glasses | | |
|---|---|---|---|---|
| EX | SiO2/ TEOS (molar ratio) | Disc 110mm diameter | Disc 226 mm diameter | Tube 570 mm lenght |
| 1 | 2 | 59 | 33 | 0 |
| 2 | 2,58 | 79 | 50 | 0 |
| | 3,46 | 90 | 60 | 46 |
| 3 | 3,85 | 100 | 67 | 100 |
| | 4,84 | 100 | 68 | 100 |

These results clearly show that the Silica / TEOS molar ratio enhances both the quality of the produced glasses and the yield of the process. Furthermore when the molar ratio is higher than 2.60 the effects are greatly improved.

Furthermore the inventors wanted to test the new process in a sort of very challenging conditions. It is well known, within the experts in the field (see for instance US patent 7,026,362), that the long time heating of the formed sol could have deleterious effects on the quality of the produced glasses and also on the yield refereed to unbroken glasses. For this reason it has been set up the following experiment: a sol has been prepared according to the procedure described in the example 3 which is characterized by a Silica / TEOS molar ratio 3.85. After the sol as been prepared it has been transferred to another batch and under very slow stirring it has been heated up to 100°C and the temperature has been kept for 4 hours, then the mixture has been cooled down very slowly and then poured in the above described molds.

At the end of the process for the making of glass above already described the inventors surprisingly found that all the glasses were unbroken whereas when the same procedure is used in formulation where Silica / TEOS molar ratio is inferior to 2.6 no entire objects had been produced. This means that the invention is effective regardless of the treatment that the sol undergoes.

## Claims

1. Sol-gel process for producing glass monoliths **characterized by** the following steps:

- adding pyrogenically prepared silica to a water at acidic pH;
- adding silicon alkoxide to the dispersed silica, whereby the silica /silica alkoxide molar ratio is in the ratio from 2,5 - 5;
- adjusting the pH;
- placing the sol solution into a container;
- gelling the sol to a wet gel;
- drying the wet gel;
- sintering the dry gel to yield a glass article.

**2.** A method according to claim 1, wherein the silicon alkoxide comprises tetraethylorthosilicate (TEOS).

**3.** A method according to claim 1, wherein the silicon alkoxide comprises tetramethylorthosilicate (TMOS).

**4.** A method according to claim 1, wherein the silicon alkoxide comprises methyltriethylorthosilicate (MTEOS).

**5.** A method according to claim 1, where the pH is in the range from 1,5 to 3,0.

**6.** A method according to claim 1, where the pH is adjusted in the range 4,2 to 5,5, more preferably from 4,5 to 5.

**7.** A method according to claim 1, where the solvent is not evaporated.

**8.** A method according to claim 1, wherein the steps A-D are carried out in one single batch.

**European Patent Office**

## EUROPEAN SEARCH REPORT

Application Number

EP 06 12 0242

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 661 866 A (DEGUSSA [DE]) 31 May 2006 (2006-05-31) * examples * ----- | 1-8 | INV. C03C1/00 C03C3/06 C01B33/158 C03B8/02 |
| Y | EP 1 258 456 A (DEGUSSA [DE]) 20 November 2002 (2002-11-20) * column 6, paragraph 38 * ----- | 1-8 | |
| D,X | WO 01/53225 A (YAZAKI CORP [JP]; GANGULI RAHUL [US]; WESTENBERG ENRICO C J [US]) 26 July 2001 (2001-07-26) * the whole document * ----- | 1-8 | |
| A | WO 2004/089816 A (DEGUSSA [DE]; LORTZ WOLFGANG [DE]; BATZ-SOHN CHRISTOPH [DE]; PERLET GA) 21 October 2004 (2004-10-21) * page 4, line 1 - line 26 * ----- | 1-8 | |
| A | JP 06 074148 B (SEIKO EPSON CORP) 21 September 1994 (1994-09-21) * the whole document * ----- | 1-8 | TECHNICAL FIELDS SEARCHED (IPC) C03C C03B C01B |

The present search report has been drawn up for all claims

| Place of search | Date of completion of the search | Examiner |
|---|---|---|
| The Hague | 23 March 2007 | Reedijk, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 897 860 A1**

## ANNEX TO THE EUROPEAN SEARCH REPORT
## ON EUROPEAN PATENT APPLICATION NO.

EP 06 12 0242

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2007

| Patent document cited in search report | | Publication date | Patent family member(s) | | Publication date |
|---|---|---|---|---|---|
| EP 1661866 | A | 31-05-2006 | WO | 2006056291 A1 | 01-06-2006 |
| EP 1258456 | A | 20-11-2002 | NONE | | |
| WO 0153225 | A | 26-07-2001 | US | 2002157419 A1 | 31-10-2002 |
| WO 2004089816 | A | 21-10-2004 | CN | 1771192 A | 10-05-2006 |
| | | | DE | 10317066 A1 | 11-11-2004 |
| | | | EP | 1611054 A1 | 04-01-2006 |
| | | | JP | 2006522731 T | 05-10-2006 |
| | | | US | 2006104881 A1 | 18-05-2006 |
| JP 6074148 | B | 21-09-1994 | JP | 1953018 C | 28-07-1995 |
| | | | JP | 61168541 A | 30-07-1986 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6209357 B
- US 5264197 A
- JP 2005255495 A
- WO 0153225 A, Yazaki
- WO 02074704 A1, Yazaki
- EP 1700830 A1
- EP 1700830 A
- US 6852300 B
- DE 19601415 A1
- EP 1182168 A1
- DE 10342828
- DE 10030251
- DE 10030252
- WO 2004054929 A
- WO 2001A000006 A
- US 7026362 B

**Non-patent literature cited in the description**

- **NOGAMI.** *Journal of Non-Crystalline Solids,* 1980, vol. 37 (191
- **RABINOVICH.** *Journal of Non-Crystalline Solids,* 1982, vol. 47 (435
- **HUESSING ; SCHUBERT.** *Angewandte Chemie,* 1998, vol. 37, 22
- Ullmanns Enzyklopädie der technischen Chemie. 1982, vol. 21, 464